# EUROPEAN PATENT SPECIFICATION

(11) **EP 1 061 294 B1**
(45) Date of publication and mention of the grant of the patent: **23.04.2003**
(21) Application number: 00304582.0
(22) Date of filing: 01.06.2000
(51) Int. Cl.: F16J 9/22, F16J 10/04, F02F 11/00

(54) **Advanced antipolishing ring arrangement**
Nichpoliernede Ringdichtung
Anneau résistant au polissage

(30) Priority: 04.06.1999 FI 991282
(43) Date of publication of application: 20.12.2000
(73) Proprietor: Wärtsilä NSD OY AB, 00530 Helsinki (FI)
(72) Inventor: Nurmi, Hannu, 65380 Vaasa (FI)
(74) Representative: Hanson, William Bennett

(56) References cited:
- EP-A- 0 684 411
- DE-A- 3 642 352
- DE-A- 4 213 502
- FR-A- 2 028 566
- US-A- 2 170 477

## Description

This invention relates to an antipolishing ring arrangement according to the preamble of claim 1, utilized in a cylinder of a large combustion engine, which arrangement is supported on a cylinder sleeve.

In this context the expression "large diesel engine" means such an engine which may be used, for example, as a main or auxiliary engine of a ship or which is suitable for the production of heat and/or electricity.

In cylinder sleeves of large combustion engines, specifically diesel engines and so called gas engines, in which gaseous fuel, for example natural gas, is utilized as the main fuel, antipolishing rings are commonly used for removing any deposit accumulating on the top land of a piston. Thus wear of the cylinder sleeve and consumption of lubricating oil may be decreased. The ring is usually made of one element, and if the top land of the piston or a part of the cylinder above the piston is relatively long in the axial direction of the cylinder sleeve, the antipolishing ring will also be made relatively long. Thus, a thin ring is difficult to manufacture to be dimensionally accurate and it is additionally difficult to install, because the mounting clearance is small.

Different parts of an antipolishing ring are affected by different circumstances, so that the ring may also have other different functions. The lower part of the ring, or outermost part in respect of the combustion chamber of the cylinder, is usually colder and its purpose is to scrape off deposits accumulating on the top land of the piston, so that durability against wear is needed. The upper part of the ring in turn is exposed to a great heat load and a heat corrosion load, so that its heat expansion is greater than that of the lower part of the ring. Hence the upper part of the ring may accumulate a lot of deposits, which may come loose and accumulate on the sliding surfaces of the cylinder. Further, in an attempt to increase the process temperature, particularly in power plant engines, the insulation of the combustion chamber of the cylinder assists in obtaining better efficiency. Thus, the upper part of the ring may also be utilized as a heat insulating element. As a result, the demands placed on the materials at the upper and lower parts of the ring may by considerably different.

A solution to the problems mentioned above is shown in F1 95830, to which publication US 5553585 corresponds. The solution is based on arrangements by means of which the lower part of the ring is bent towards the top land of the piston at the normal operating speed and load of the engine or when it is fully warmed up. These arrangements make the construction more complicated and are thus more laborious from a manufacturing point of view.

It is an object of the invention to provide a new, advanced antipolishing ring arrangement, in which the above mentioned drawbacks are substantially eliminated. It is an object to render the arrangement of simple construction and durable, amply allowing for the requirements set by different operating conditions, and easy to mount.

These objects of the invention are achieved by an antipolishing arrangement according to claim 1, preferred or optional features being presented in the other claims. According to the invention the antipolishing ring arrangement comprises at least two separate ring elements, which have been arranged one after the other in the axial direction of the cylinder sleeve. In this way it is possible to select the properties of the ring element independently and without separate additional arrangements so that they correspond to the requirements of the external operating circumstances of both ring elements as closely as possible.

For convenience in the following, the ring element that is nearest the combustion chamber will be referred to as the first ring element and the ring element that is adjacent the first ring element will be referred to as the second ring element. The invention will be described in detail with reference to an antipolishing ring arrangement consisting of two ring elements, but naturally an antipolishing ring arrangement in accordance with the invention may have more than two ring elements.

The inner diameter of the first ring element, closer to the combustion chamber of the cylinder, is preferably smaller than that of the second ring element. In this manner it is ensured that the amount of deposit accumulating near the first ring element can not be greater than near the second ring element.

The ring elements are preferably also of different material. Thus, the material of the first ring element, closer to the combustion chamber of the cylinder has preferably been selected so that its coefficient of heat expansion is smaller than that of the second ring element.

The first ring element is preferably of heat resistant,. heat corrosion durable or heat insulating material, for example of martensitic stainless steel. The second ring element may respectively be selected from wear resistant material, for example of hard cast iron. Materials comprising large amount of carbides are particularly suitable for this purpose.

The inner surface of the first ring element preferably comprises an array of grooves, notches or alike, which can accumulate the deposit. In this case the accumulated deposit functions in turn as a heat insulating element and does not come loose as easily as it would if the inner surface were smooth.

Furthermore, the ring elements are preferably symmetrical so that they are turnable to be mounted upside down. Specifically, the second ring element may be turnable upside down easily without clearance problems, so that its service life may in practice be doubled. In respect of the first ring element the clearance problems may be avoided by proper material selection, so that considering the circumstances the heat expansion is as small as possible. In this way, turning upside down may be accomplished also in this case, thus extending the service life of the ring element.

In the following the invention is described, by way of example only, with reference to the attached drawings, in which
- Fig. 1 shows an antipolishing ring arrangement according to the invention as an elevation in axial direction of the cylinder sleeve,
- Fig. 2 shows another antipolishing ring arrangement according to the invention as an elevation in axial direction of the cylinder sleeve, and
- Fig. 3 shows a third antipolishing ring arrangement according to the invention as an elevation in axial direction of the cylinder sleeve.

In the drawings, the reference 1 designates a cylinder of a large combustion engine having a cylinder sleeve 2, inside of which a piston 3 has been arranged to reciprocate. The cylinder sleeve 2 has been provided with an antipolishing ring arrangement, which comprises two separate ring elements 4 and 5. These form a small step, the purpose of which is to remove any deposits accumulating on the upper part, or top land, of the piston, during the running of the engine.

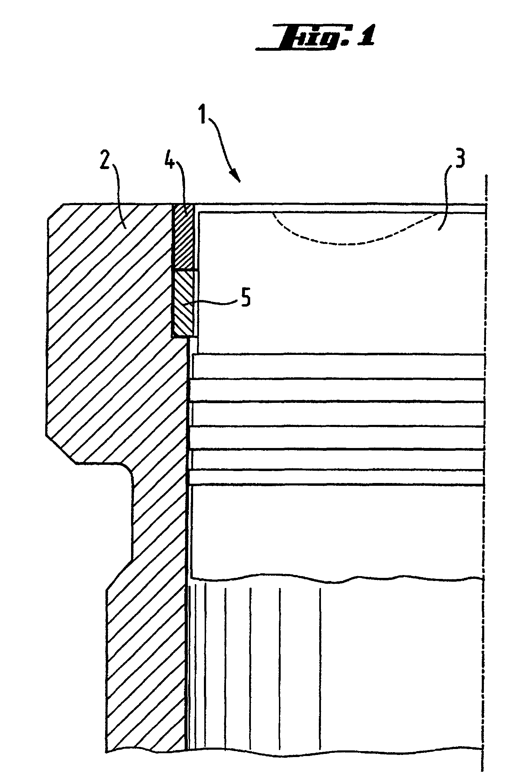

In the embodiment of Figure 1 the ring elements 4 and 5 are generally of the same diameter. Due to the first ring element 4 being closer to the combustion chamber of the cylinder (not shown) located above the piston 3 and being thus susceptible to higher temperatures, it may be respectively selected from material having a smaller heat expansion than the second ring element 5. In this way the different external circumstances may be compensated so that the formation and removal of deposits correspond better to each other in different parts of the ring elements and the piston 3.

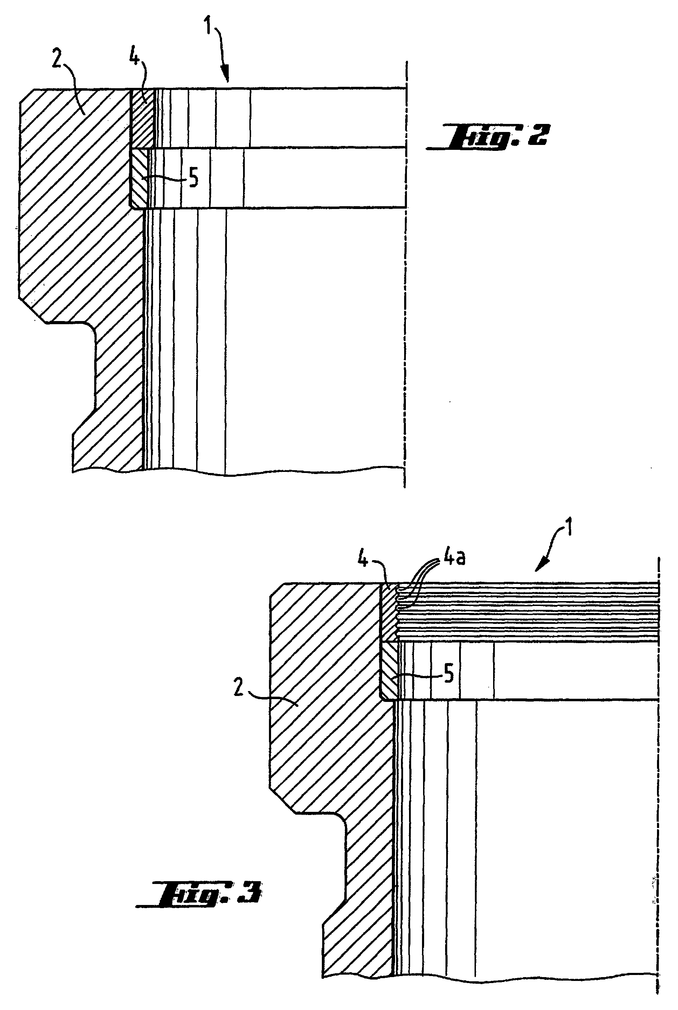

In the embodiment of Figure 2 the heat expansion due to the greater heat load of the first ring element 4 has been compensated by making its inner diameter smaller than that of the second ring element 5.

In the embodiment of Figure 3 the inner surface of the first ring element 4 comprises an array of grooves 4a. It is an intention of the grooves to accumulate the deposit, and such accumulation is more successful if the grooves are sharp edged. Otherwise the form, position, size and location of the grooves 4a may vary, and also notches or the like, or other recesses may be utilized for the purpose. The accumulated deposit functions in turn as a heat-insulating element, which lends itself to the possible objective of increasing the temperature of the combustion process.

The ring elements 4 and 5 are preferably made symmetrical in all of the illustrated embodiments, so that depending on wear they may be turned upside down as needed in order to extend their service life.

In the specific case where the top land of the piston is longer than usual in the axial direction of the cylinder, such as in a typical large two-stroke diesel engine, more than two ring elements respectively may also be provided.

The invention is not restricted to the embodiments shown, but several modifications are feasible within the scope of the attached claims.

## Claims

1. An antipolishing ring arrangement utilized in a cylinder (1) of a large combustion engine, which arrangement is supported on a cylinder sleeve (2), **characterized in that** the antipolishing ring arrangement comprises at least two separate ring elements (4,5), arranged adjacent one another along the central axis of the cylinder sleeve (2).

2. An antipolishing ring arrangement according to claim 1, **characterized in that** the ring elements (4,5) are of different respective materials.

3. An antipolishing ring arrangement according to claim 1 or 2, **characterised in that** the ring elements comprise a first ring element (4) closest to the combustion chamber of the cylinder (1) and a second ring element (5) adjacent the first ring element (4).

4. An antipolishing ring arrangement according to claim 3, **characterized in that** the inner diameter of the first ring element (4) is smaller than that of the second ring element (5).

5. An antipolishing ring arrangement according to claim 3 or 4, **characterized in that** the material of the first ring element (4) has a smaller coefficient of heat expansion than that of the second ring element (5).

6. An antipolishing ring arrangement according to claim 3, 4 or 5, **characterized in that** the first ring element (4) is made of heat resistant, heat corrosion durable or heat insulating material.

7. An antipolishing ring arrangement according to claim 6, **characterized in that** the first ring element (4) is made of martensitic stainless steel.

8. An antipolishing ring arrangement according to any of claims 3 to 7, **characterized in that** the second ring element (5) is made of wear resistant material.

9. An antipolishing ring arrangement according to claim 8, **characterized in that** the second ring element (5) is made of hard cast iron.

10. An antipolishing ring arrangement according to any of claims 3 to 9, **characterized in that** the inner surface of the first ring element (4) is formed with an array of recesses (4a).

11. An antipolishing ring arrangement according to claim 10, **characterized in that** the recesses (4a) are grooves or notches.

12. An antipolishing ring arrangement according to any of the preceding claims, **characterized in that** one of the ring elements (4,5) is symmetrical about a plane perpendicular to the central axis of the cylinder sleeve so that the ring element can be turned and mounted upside down.

13. An antipolishing ring arrangement according to any of the preceding claims, **characterized in that** each of the ring elements (4,5) is symmetrical about a plane perpendicular to the central axis of the cylinder sleeve so that each ring element can be turned and mounted upside down.

## Patentansprüche

1. Zylinderringanordnung (antipolishing ring), welche in einem Zylinder (1) eines großen Verbrennungsmotors benutzt wird, welche Anordnung von einer Zylinderbuchse (2) getragen ist,
**dadurch gekennzeichnet, dass** die Zylinderringanordnung wenigstens zwei separate Ringelemente (4, 5) umfasst, welche nebeneinander entlang der zentralen Achse der Zylinderbuchse (2) angeordnet sind.

2. Zylinderringanordnung nach Anspruch 1,
**dadurch gekennzeichnet, dass** die Ringelemente (4, 5) aus voneinander unterschiedlichen Materialien bestehen.

3. Zylinderringanordnung nach Anspruch 1 oder 2,
**dadurch gekennzeichnet, dass** die Ringelemente ein erstes Ringelement (4) umfassen, welches der Verbrennungskammer des Zylinders (1) am nächsten ist und ein zweites Ringelement (5), welches dem ersten Ringelement (4) benachbart ist.

4. Zylinderringanordnung nach Anspruch 3,
**dadurch gekennzeichnet, dass** der innere Durchmesser des ersten Ringelementes (4) kleiner ist als der des zweiten Ringelements (5).

5. Zylinderringanordnung nach Anspruch 3 oder 4,
**dadurch gekennzeichnet, dass** das Material des ersten Ringelements (4) einen kleineren Wärmeausdehnungskoeffizienten hat als das des zweiten Ringelements (5).

6. Zylinderringanordnung nach Anspruch 3, 4 oder 5,
**dadurch gekennzeichnet, dass** das erste Ringelement (4) aus hitzebeständigem, hitzekorrosionsbeständigem oder hitzeisolierendem Material hergestellt ist.

7. Zylinderringanordnung nach Anspruch 6,
**dadurch gekennzeichnet, dass** das erste Ringelemente (4) aus martensitischem rostfreiem Stahl hergestellt ist.

8. Zylinderringanordnung nach einem der Ansprüche 3 bis 7,
**dadurch gekennzeichnet, dass** das zweite Ringelement (5) aus verschleißfestem Material hergestellt ist.

9. Zylinderringanordnung nach Anspruch 8,
**dadurch gekennzeichnet, dass** das zweite Ringelement (5) aus Hartguss hergestellt ist.

10. Zylinderringanordnung nach einem der Ansprüche 3 bis 9,
**dadurch gekennzeichnet, dass** die innere Fläche des ersten Ringelements (4) mit einer Reihe von Aussparungen (4a) geformt ist.

11. Zylinderringanordnung nach Anspruch 10,
**dadurch gekennzeichnet, dass** die Aussparungen (4a) Nuten oder Kerben sind.

12. Zylinderringanordnung nach einem der vorhergehenden Ansprüche,
**dadurch gekennzeichnet, dass** eines der Ringelemente (4, 5) symmetrisch bezüglich einer zu der zentralen Achse der Zylinderbuchse lotrechten Ebene ist, so dass das Ringelement gewendet und umgedreht montiert werden kann.

13. Zylinderringanordnung nach einem der vorhergehenden Ansprüche,
**dadurch gekennzeichnet, dass** jedes der Ringelemente (4, 5) symmetrisch bezüglich einer zu der zentralen Achse der Zylinderbuchse lotrechten Ebene ist, so dass jedes Ringelement gewendet und umgedreht montiert werden kann.

## Revendications

1. Agencement d'anneau antipolissage utilisé dans un cylindre (1) d'un gros moteur à combustion, lequel agencement est supporté sur un manchon de cylindre (2), **caractérisé en ce que** l'agencement d'anneau antipolissage comprend au moins deux éléments d'anneau séparés (4, 5), adjacents l'un à l'autre le long de l'axe central du manchon de cylindre (2).

2. Agencement d'anneau antipolissage selon la revendication 1, **caractérisé en ce que** les éléments d'anneau (4, 5) sont en matériaux respectifs différents.

3. Agencement d'anneau antipolissage selon la revendication 1 ou 2, **caractérisé en ce que** les éléments d'anneau comprennent un premier élément d'anneau (4) le plus proche de la chambre de combustion du cylindre (1) et un deuxième élément d'anneau (5) adjacent au premier élément d'anneau (4).

4. Agencement d'anneau antipolissage selon la revendication 3, **caractérisé en ce que** le diamètre intérieur du premier élément d'anneau (4) est plus petit que celui du deuxième élément d'anneau (5).

5. Agencement d'anneau antipolissage selon la revendication 3 ou 4, **caractérisé en ce que** le matériau du premier élément d'anneau (4) a un plus faible coefficient de dilatation thermique que celui du deuxième élément d'anneau (5).

6. Agencement d'anneau antipolissage selon la revendication 3, 4 ou 5, **caractérisé en ce que** le premier élément d'anneau (4) est fabriqué en matériau résistant à la chaleur, résistant à la corrosion thermique ou d'isolation thermique.

7. Agencement d'anneau antipolissage selon la revendication 6, **caractérisé en ce que** le premier élément d'anneau (4) est fabriqué en acier inoxydable martensitique.

8. Agencement d'anneau antipolissage selon l'une quelconque des revendications 3 à 7, **caractérisé en ce que** le deuxième élément d'anneau (5) est fabriqué en matériau résistant à l'usure.

9. Agencement d'anneau antipolissage selon la revendication 8, **caractérisé en ce que** le deuxième élément d'anneau (5) est fabriqué en fonte dure..

10. Agencement d'anneau antipolissage selon l'une quelconque des revendications 3 à 9, **caractérisé en ce que** la surface interne du premier élément d'anneau (4) est formée avec un ensemble de retraits (4a).

11. Agencement d'anneau antipolissage selon la revendication 10, **caractérisé en ce que** les retraits (4a) sont des rainures ou des encoches.

12. Agencement d'anneau antipolissage selon l'une quelconque des revendications précédentes, **caractérisé en ce qu'**un des éléments d'anneau (4, 5) est symétrique par rapport à un plan perpendiculaire à l'axe central du manchon de cylindre de sorte que l'élément d'anneau puisse être tourné et monté à l'envers.

13. Agencement d'anneau antipolissage selon l'une quelconque des revendications précédentes, **caractérisé en ce que** chacun des éléments d'anneau (4, 5) est symétrique par rapport à un plan perpendiculaire à l'axe central du manchon de cylindre de sorte que chaque élément d'anneau puisse être tourné et monté à l'envers.
